# EUROPÄISCHE PATENTSCHRIFT

(11) **EP 2 607 211 B1**
(45) Veröffentlichungstag und Bekanntmachung des Hinweises auf die Patenterteilung: **01.02.2017**
(21) Anmeldenummer: 12400036.5
(22) Anmeldetag: 23.08.2012
(51) Int. Cl.: B62D 21/02, B62D 21/12, B62D 21/17

(54) **Nutzfahrzeug mit einem modularen Fahrgestellrahmen, dessen Längsträger durch Querträger verbunden sind**
Commercial vehicle with a modular chassis frame whose longitudinal beams are connected by cross beams
Véhicule utilitaire avec un cadre de châssis modulaire dont les supports longitudinaux sont liés par des traverses

(30) Priorität: 22.12.2011 DE 102011122460
(43) Veröffentlichungstag der Anmeldung: 26.06.2013
(73) Patentinhaber: MAN Truck & Bus AG, 80995 München (DE)
(72) Erfinder: Acer, Serkan, 87719 Mindelheim (DE); Noebauer, Andreas, 85375 Neufahrn (DE); Barnreiter, Robert, 81371 München (DE); Eberle, Andreas, 80687 München (DE)
(74) Vertreter: v. Bezold & Partner Patentanwälte - PartG mbB

(56) Entgegenhaltungen:
- EP-A1- 2 159 135
- EP-A2- 2 184 220
- US-A1- 2006 071 466

## Beschreibung

Die Erfindung betrifft ein Nutzfahrzeug mit einem Fahrgestellrahmen, der durch Querträger verbundene Längsträger umfasst, die jeweils durch je einen Verbindungsschuh miteinander verbunden sind, wobei der Fahrgestellrahmen aus einzelnen Modulen zusammengesetzt ist.

Der Fahrgestellrahmen bildet die Basis für das Fahrgestell eines Nutzfahrzeugs. Er nimmt alle Achsen und den gesamten Antriebsstrang mit dem Motor und dem Getriebe auf. Zusätzlich trägt er das Fahrerhaus sowie die vorhandenen Aufbauten. Der Fahrgestellrahmen eines Nutztaitrzeugs umfasst in der Regel zwei Längsträger, die durch mehrere parallel zueinander verlaufende Querträger verbunden sind. Da eine Zugmaschine mit einem auf dem Fahrgestellrahmen montierten Fahrerhaus mit verschiedenen Aufbauten kombiniert werden kann, ist es heute im LKW- und Busbau üblich, den Fahrzeugrahmen in ein Front-, ein Mittel- und ein Heckmodul zu unterteilen. Je nachdem, für welchen Einsatzzweck das jeweilige Nutzfahrzeug gedacht ist, sind jeweils vorgefertigte Front- und Heckmodule miteinander kombinierbar. Zur Verbindung des Front- mit dem Heckmodul kann zwischen beiden Modulen wenigstens ein Mittelmodul angeordnet werden. Die jeweiligen Module werden im Bereich der Längsträger durch Verbindungsschuhe aneinander befestigt. Wegen der hohen Achslasten des Front- und des Heckmoduls haben sich bei den heutigen Nutzfahrzeugen Starrachsen durchgesetzt. Zu den wichtigsten Bauteilen der Radaufhängung solcher Achsen zählen dabei die so genannten Achslenker. Sie verbinden die Rad- bzw. Achsführung mit dem Fahrgestellrahmen und nehmen so die Rad- bzw. Achsführungskräfte auf. Vorstellbar sind hierbei zum Beispiel Quer- und Dreieckslenker. Längslenker werden hingegen in Kombination mit der Luftfederung eingesetzt, wobei der Längslenker in der Regel nur Kräfte in Längsrichtung übernimmt. Sowohl bei der Verbindung der jeweils aneinander anstoßenden Längsträger der Front-, Mittel- und Heckmodule als auch bei der Anbindung der Achslenker an den Rahmenlängsträger kommen Multifunktionslagerböcke zum Einsatz.

Aus der gattungsgemäßen EP 2 184 220 A2 ist ein Nutzfahrzeug bekannt, dessen durch Querträger mit einander verbundene Längsträger des Fahrgestells aus mindestens zwei modularen Längsträgerabschnitten bestehen. Die Enden der Längsträgerabschnitte sind durch einen Verbindungsschuh miteinander verbunden. Der Verbindungsschuh ist derart ausgeführt, dass die Längsträgerabschnitte in einem unterschiedlichen Höhenniveau angeordnet sind und der Verbindungsschuh die Höhendifferenz zwischen den miteinander zu verbindenden Enden überbrückt.

Aus der EP 1 110 848 B 1 ist ein Längslenkerbock bekannt, der an einem Rahmenlängsträger eines Nutzfahrzeugs angeordnet ist und Mittel zur Abstützung und Lagerung von Längslenkern sowie wenigstens einen Stabilisator aufweist. Der Längslenkerbock weist Mittel zur Abstützung und Lagerung von Dreieckslenkern und wenigstens eine Ausmuldung zur bereichsweise umgreifenden Aufnahme des endseitigen Bereiches des Torosionsabschnittes auf. Der Torosionsabschnitt gehört dabei wenigstens einem, quer zur Ausmuldung verlaufenden Stabilisator. Zur Befestigung des jeweiligen Stabilisators am Längslenkerbock wirkt die Ausmuldung mit einer, den Stabilisator bereichsweise umgreifenden Haltemuffe zusammen.

Aus DE 93 08 329 U geht weiterhin ein Rahmen eines Nutzfahrzeugs, insbesondere eines Frontlenker-Lastkraftwagens hervor, der zwei über Querträger verbundene Längsträger aufweist. Der Rahmen setzt sich aus mehreren vorgefertigten bzw. vormontierten Modulen zusammen, von denen jeder aus zwei, durch wenigstens einen Querträger verbundenen Längsabschnitten besteht. Die Längsträgerabschnitte zweier an aneinander angrenzender Rahmenmodule sind bei der Rahmen-Endmontage zueinander fluchtend angeordnet und werden über einen, als Längs- und Quer-Verbindungsorgan dienenden Querträger miteinander verbunden. Hierbei überbrückt der Querträger mit seinen Anschlussorganen, die an beiden Enden vorgesehen sind, die jeweilige Stoßfuge zwischen zwei Modulen.

Nachteilig ist jedoch, dass bei heutigen Fahrgestellrahmen die elektrischen Leitungen, die Druckluftleitung sowie sonstige Leitungen, die der Wasser- oder der Betriebsstoffversorgung dienen oftmals an der Unterseite des Fahrgestellrahmens eines LKWs oder eines Busses angeordnet sind. Die Leitungen sind im Regelfall der Beschädigung durch aufgewirbelte Steine oder durch Spritzwasser schutzlos ausgeliefert.

Es ist daher die Aufgabe der vorliegenden Erfindung einen Fahrgestellrahmen für ein Nutzfahrzeug zu schaffen, bei dem wichtige elektrische oder pneumatische Leitungen sowie Versorgungsleitungen zum Transport von Wasser oder Betriebsstoff vor Beschädigung geschützt sind.

Die Aufgabe wird durch die Merkmale des Patentanspruchs 1 gelöst.

Das erfindungsgemäße Nutzfahrzeug umfasst einen Fahrgestellrahmen, dessen Längsträger durch eine Vielzahl von Querträgern mit einander verbunden sind und der aus einzelnen Modulen zusammengesetzt ist. Die einzelnen Module können sich relativ zur Fahrzeuglängsrichtung auf einem einheitlichen oder aber auf unterschiedlichen Höhenniveaus befinden. Die jeweiligen längs aneinander anstoßenden einzelnen Module des Fahrgestellrahmens sind durch Verbindungsschuhe miteinander verbunden. Je nachdem, ob sich die aneinander anstoßenden Längsträgermodule in Bezug zur Fahrzeuglängsrichtung auf einem einheitlichen oder auf unterschiedlichen Höhenniveaus befinden, erstreckt sich der jeweilige Verbindungsschuh achsparallel zur Fahrzeuglängsachse. Befinden sich die aneinander angrenzenden Längsträgermodule auf unterschiedlichen Höhenniveaus und/oder sind die stirnseitig aneinander anstoßenden Längsträger in Fahrzeuglängsrichtung zueinander horizontal seitlich versetzt, so weisen die Verbindungsschuhe zum Ausgleich des Höhenniveaus in Längsrichtung gesehen einen Knick auf. Das Frontmodul befindet sich im Bereich eines herkömmlichen Nutzfahrzeugs im Bereich des Fahrerarbeitsplatzes und umfasst den Motor, das Getriebe sowie wenigstens eine Achse. Das Heckmodul umfasst die wenigstens eine rückwärtige Achse des Busses oder des LKWs. Das Front- und das Heckmodul werden jeweils durch wenigstens ein Mittelmodul miteinander verbunden, wobei insbesondere bei Bussen, die im Nahverkehr eingesetzt werden, das wenigstens eine Mittelmodul oftmals relativ zum Front- und Heckmodul tiefer gelegt ist. Die Verbindungsschuhe können je nach Größe und Schwere des Nutzfahrzeugs als Guss- oder Schmiedeteile gefertigt sein. Abhängig vom jeweiligen Verwendungszweck überbrückt der Verbindungsschuh auf engstem Raum einen horizontalen und/oder vertikalen Rahmenversatz zwischen den Längsträgermodulen. Quer zur Fahrzeuglängsrichtung sind an der Außenseite des Verbindungsschuhs an diesem oder am Längsträger weitere Querträger angeordnet, die z.B. der Abstützung der Karosserie des Fahrzeuges dienen. Der weitere Querträger kann als C-Profil oder in Rohrform gefertigt sein. Der Querträger ist dabei in etwa rechtwinklig zur Fahrzeuglängsachse an der Außenseite des Verbindungsschuhs befestigt und kann mit dem Längsträger bzw. mit dem Verbindungsschuh verschraubt, vernietet oder mit den genannten Bauteilen einstückig gefertigt sein. Ist eine weitere Versteifung der Karosserie erforderlich, können an der Außenseite eines Verbindungsschuhs jeweils zwei weitere Querträger angeordnet sein. Die Längsträger, die Querträger und die weiteren Querträger sind jeweils als C-Profil ausgebildet. Denkbar sind jedoch auch alle anderen im Fahrzeugbau verwendeten Profilformen. Rohrleitungen für Fluide, elektrische Leitungen oder Rohrleitungen für die Druckluftversorgung verlaufen im Nutzfahrzeug entlang der Längs- und der Querträger. Zur Verbindung einzelner Leitungselemente mit einander sind Ausdehnungsstücke, Dichtungen, Flansche und Muffen vorgesehen. Bei der Konstruktion des Fahrzeugs müssen für die Verlegung der Versorgungsleitungen die Trennstellen der einzelnen Module besonders beachtet werden. Aus Fertigungs- und Montagezwecken müssen die Trennstellen der Versorgungsleitungen mit den Trennstellen der Module übereinstimmen. Die Versorgungsleitungen sind dabei verliersicher an den Längs- und Querträgern des Fahrgestellrahmens zu befestigen.

Erfindungsgemäß ist es vorgesehen, die Versorgungsleitungen in die Verbindungsschuhe zu integrieren. Transportleitungen sowie die Schächte für Transportleitungen können bei gegossenen Verbindungsschuhen in beliebiger Anzahl im Verbindungsschuh vorgesehen sein. Der Vorteil der Erfindung besteht somit darin, dass der Verbindungsschuh nicht nur die Trennstelle zwischen den einzelnen Modulen des Fahrgestellrahmens bildet, sondern auch die Schnittstelle für die Betriebsstoff-, Hydraulik- und Pneumatikversorgungsleitungen bildet. Der erfindungsgemäße Verbindungsschuh weist zur Verbindung mit anderen Bauteilen ein genormtes Lochbild auf. Das Lochbild kann an den einzelnen Flanschflächen z.B. symmetrisch oder asymmetrisch gestaltet sein, so dass ein anzuschließendes Bauteile um seine Längsachse gedreht einbaubar ist. Der Vorteil besteht darin, dass auf diese Weise auch einen Versatz des Bauteils in entgegen gesetzter Richtung realisierbar ist.

Eine weitere Ausführungsform der Erfindung sieht vor, dass das Verbindungselement an den Verbindungsschuh angeformt ist. Der Verbindungsschuh kann dabei kraft-, form- und stoffschlüssig mit dem Verbindungselement verbunden sein. Durch den Wegfall zusätzlicher Verbindungselemente können die Herstellungskosten des Fahrzeugs gesenkt werden.

In einer anderen Ausführungsform der Erfindung ist vorgesehen, dass das Verbindungselement ein in den Verbindungsschuh integriertes Rohrstück ist. An jedem Ende des Rohrstücks ist je eine Kupplung vorgesehen, die einen Anschluss an eine, am Fahrgestellrahmen geführte Leitung ermöglicht. Im Verbindungsschuh können mehrere Rohrstücke unterschiedlichen Durchmessers vorgesehen sein. Die Rohrstücke können zur Durchführung von elektrischen Leitungen isoliert sein oder isolierende Kunststoffinlays aufweisen. Die Kupplungen sind genormt und ermöglichen so eine gegenseitige Verbindung der Leitungen am Fahrgestellrahmen.

Eine weitere Ausführungsform der Erfindung sieht vor, dass das Verbindungselement ein in den Verbindungsschuh integriertes elektrisches Leiterelement ist, das an eine am Fahrgestellrahmen geführte elektrische Leitung anschließbar ist. Auf diese Weise sind die Kabelstränge gegenüber dem metallischen Fahrgestellrahmen des Nutzfahrzeugs isoliert und zusätzlich vor äußerer Beschädigung oder Wassereinbruch geschützt.

Weiterhin ist vorgesehen, dass das Verbindungselement eine am Verbindungsschuh angeordnete Halterung ist, die zur Befestigung einer Vielzahl von Leitungen dient und dabei den Verbindungsbereich zwischen zwei aneinander anstoßenden Modulen überbrückt. Hierbei kann die Halterung als Klemmbuchse ausgebildet sein. Das Verbindungselement umfasst jeweils mindestens zwei miteinander kommunizierende Steckelemente, von denen das eine am Verbindungsschuh angeordnet ist und das andere an der Verbindungsleitung befestigt ist. Die Montage bzw. die Demontage des Verbindungsschuhs am/vom Längs- oder Querträger zu Reparatur- oder Wartungszwecken wird auf diese Weise wesentlich erleichtert.

Eine zusätzliche Ausführungsform der Erfindung sieht vor, dass das Verbindungselement die Form einer Buchse aufweist, in die ein rohrförmiges Anschlussstück eines am Fahrgestellrahmen zu befestigenden Bauteils einsteckbar ist. Auf diese Weise lässt sich der Stabilisator in einer spannungsoptimierten Position am Fahrgestellrahmen anordnen, in der ein direkter Kraftfluss in das Bauteil gewährleistet ist. Zur Reduzierung des Gewichts des Verbindungsschuhs sowie zur Reduzierung der Anzahl der zur Herstellung des Nutzfahrzeugs erforderlichen Einzelteile ist der Verbindungsschuh mit wenigstens einem Aufnahmeflansch für ein Stabilisatorlager ausgestattet.

Weitere Merkmale, Einzelheiten und Vorteile der Erfindung ergeben sich aus der folgenden Beschreibung verschiedener Ausführungsformen der Erfindung sowie anhand der Zeichnung. Hierbei zeigen:
- Figur 1: einen Verbindungsschuh, der zur Verbindung zweier Längsträger und zur Anbindung eines Querträger mit Verbindungsflanschen ausgerüstet ist,
- Figur 2: einen Verbindungsschuh, vergleichbar mit Figur 1 mit einem, in den Verbindungsschuh integrierten Verbindungselement,
- Figur 3: einen Verbindungsschuh entsprechend Figur 1 mit Verbindungselementen, die auf der Oberseite des Verbindungsschuhs angeordnet sind,
- Figur 4: einen Fahrgestellrahmen eines Nutzfahrzeugs mit erfindungsgemäßen Verbindungsschuhen,
- Figur 5: zwei parallel zu einander angeordnete Verbindungsschuhe mit innenseitig angeordneten Längsträgern,
- Figur 6: zwei parallel zu einander angeordnete Verbindungsschuhe mit innenseitig angeordneten Längsträgern und einem heckseitigen Querträger,
- Figur 7: zwei parallel zu einander angeordnete Verbindungsschuhe mit innenseitig angeordneten Längsträgern und einem frontseitigen Querträger,
- Figur 8: zwei parallel zu einander angeordnete Verbindungsschuhe mit innenseitig angeordneten Längsträgern und zwei Querträgern und
- Figur 9: zwei parallel zu einander angeordnete Verbindungsschuhe mit innenseitig angeordneten Längsträgern und zwei mit einander verbundenen Querträgern.

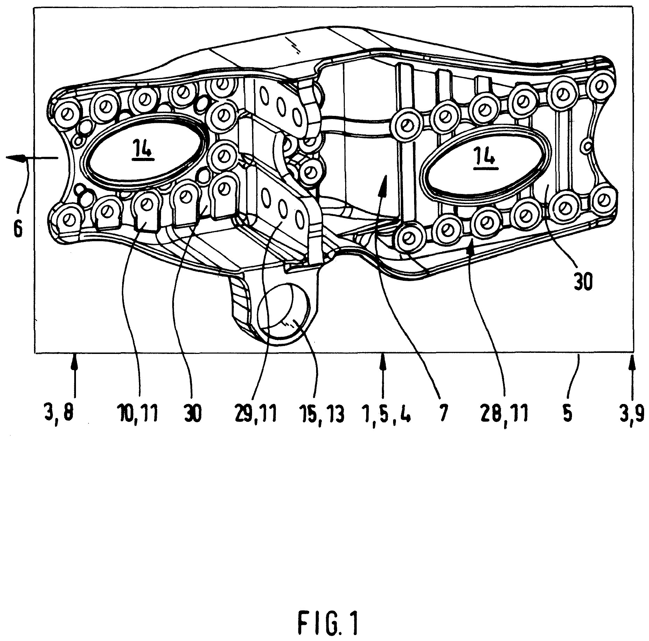

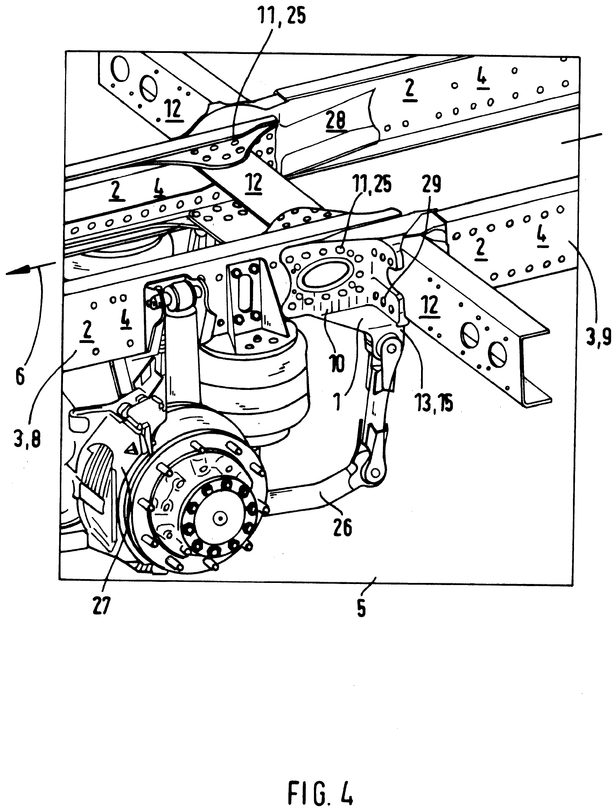

In den Figuren 1 bis 3 verlaufen die Verbindungsflansche 10; 28; 29 des Verbindungsschuhs 1 relativ zur Fahrzeuglängsrichtung 6 vertikal und horizontal zueinander versetzt. In Fig. 4 sind die Verbindungsflansche 10; 28; 29 relativ zur Fahrzeuglängsrichtung 6 horizontal zueinander versetzt angeordnet. In Fahrzeuglängsrichtung 6 weisen die Verbindungsflansche 10; 28 des Verbindungsschuhs 1 einheitliche Lochbilder 11 auf. Auf diese Weise ist der Verbindungsschuh 1 als Normteil um seine Längsachse drehbar und seine Befestigung relativ zur Fahrzeuglängsrichtung 6 auf beiden Seiten des Fahrgestellrahmens 4 an den Längsträgern 2 (nicht gezeigt) möglich.

Figur 1 zeigt einen Verbindungsschuh 1, der je zwei Längsträger 2 eines Moduls 3 eines Fahrgestellrahmens 4 eines Nutzfahrzeugs 5 mit einander verbindet. Der Verbindungsschuh 1 weist in Fahrzeuglängsrichtung 6 einen Knick 7 auf, mit dem der Verbindungsschuh 1 den horizontalen Höhenunterschied des Frontmoduls 3; 8 gegenüber dem Mittelmodul 3; 9 sowie den vertikalen Versatz der stirnseitig aneinander anstoßenden Längsträger 2 ausgleicht. In Fahrzeuglängsrichtung 6 sowie quer zur Fahrzeuglängsrichtung 6 sind Verbindungsflansche 10; 28; 29 des Verbindungsschuhs 1 mit Lochbildern 11 ausgestattet, die eine Anbindung von Querträgern 12 und Längsträgern 2 an den Verbindungsschuh 1 ermöglichen. Relativ zur Fahrzeuglängsrichtung 6 ist in den Figuren 1 bis 3 an der Unterseite des Verbindungsschuhs 1 je ein als Verbindungselement 15 dienendes Lager 13 zur Anbindung eines nicht dargestellten Stabilisators 26 angeordnet. Das Verbindungselement 15 ist in Form einer Öse ausgebildet und sitzt in Fahrzeuglängsrichtung 6 gesehen unter, vor oder hinter einem Verbindungsflansch 29. Die Öse ist zusätzlich quer Fahrzeuglängsrichtung 6 unter dem Verbindungsflansch 29 oder unter einer Seitenwand 30 des Verbindungsschuhs 1 positionierbar. Zur Gewichtsreduzierung weist der Verbindungsschuh 1 Durchbrüche 14 auf.

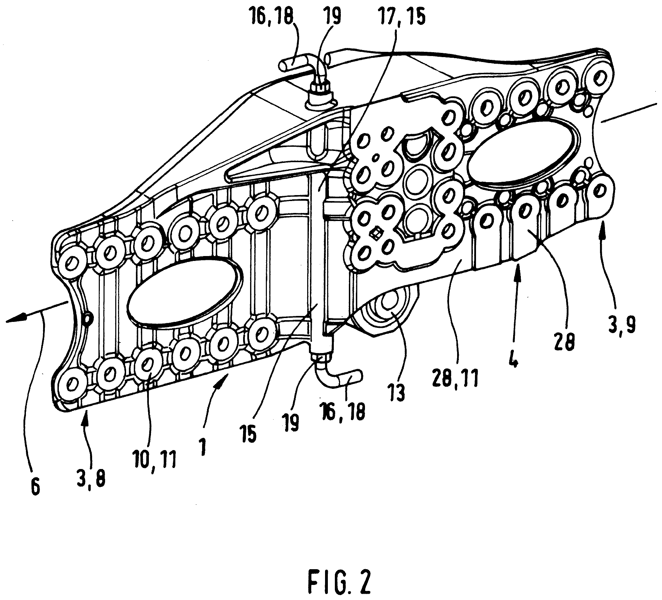

Figur 2 zeigt einen Verbindungsschuh 1 entsprechend der Darstellung in Figur 1. An dem Verbindungsschuh 1 sind Verbindungselemente 15 erkennbar, die dem Anschluss von Leitungen 16 dienen, die am Fahrgestellrahmen 4 geführt sind. Das in Figur 2 dargestellte Verbindungselement 15 ist ein, in den Verbindungsschuh 1 integriertes Rohrstück 17, welches an seinen Enden je eine Kupplung 18 aufweist. Die Kupplungen 18 verbinden das Rohrstück 17 mit den Leitungen 16, die am Fahrgestellrahmen 4 entlang geführt sind. Das Rohrstück 17 kann ein in den Verbindungsschuh 1 integriertes elektrisches Leiterelement aufnehmen, das an eine, am Fahrgestellrahmen 4 angeordnete elektrische Leitung anschließbar ist. Der in Figur 2 dargestellte Verbindungsschuh 1 weist Verbindungsflansche 10; 28 auf, an denen die Längsträger 2 befestigbar sind. Zusätzlich ist in Fahrzeuglängsrichtung 6 auf der Unterseite des Verbindungsschuhs 1 das Lager 13 zur Befestigung des Stabilisators 26 (nicht gezeigt) dargestellt. Die beiden an einander angrenzenden Module 3; 8; 9 verlaufen in Fahrzeuglängsrichtung 6 gesehen auf unterschiedlicher Höhe. Das Rohrstück 17 ist in Figur 2 in den Verbindungsschuh 1 integriert. Das Rohrstück 17 kann am Verbindungsschuh 1 angeformt sein, oder in jeder anderen Weise kraft-, stoff- oder formschlüssig mit dem Verbindungsschuh 1 verbunden sein. Zur Befestigung des Rohrstücks 17 im Verbindungsschuh 1 sind Muttern 19 angeordnet, die das Rohrstück 17 als Verbindungselement 15 verliersicher im Verbindungsschuh 1 halten. Das Rohrstück 17 weist zu beiden Enden Anschlussflansche auf, mit denen in- bzw. entgegen der Fahrzeuglängsrichtung 6 Leitungen 16 anschließbar sind. Werden im Inneren des Rohrstücks 17 elektrische Leiterelemente geführt, sind an den beiden Enden des Rohrstückes 17 Steckbuchsen vorgesehen, die eine elektrische Verbindung zu den elektrischen Leitungen aufrechterhalten.

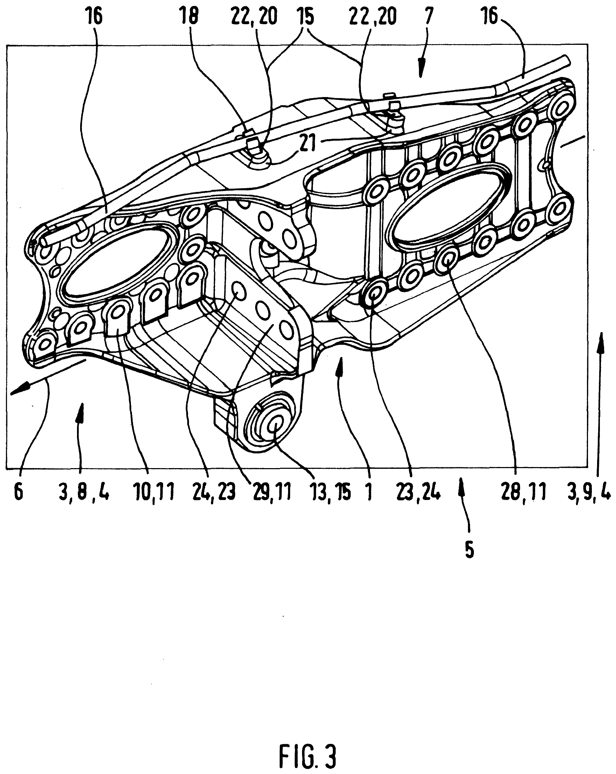

Figur 3 zeigt einen erfindungsgemäßen Verbindungsschuh 1, der in Fahrzeuglängsrichtung 6 einen Knick 7 aufweist, mit dem der Höhenunterschied zwischen je zwei Modulen 3; 8; 9 des Fahrgestellrahmens 4 des Nutzfahrzeugs 5 sowie der vertikale Versatz der stirnseitig aneinander anstoßenden Längsträger 2 ausgleichbar ist. Der Verbindungsschuh 1 weist in Fahrzeuglängsrichtung 6 Verbindungsflansche 10; 28; 29 auf, über deren Lochbilder 11 weitere Bauteile des Nutzfahrzeugs 5 am Fahrgestellrahmen 4 befestigbar sind. Der Querträger 12 verbindet die einander gegenüberliegenden Verbindungsschuhe 1 mit einander und greift dabei am Verbindungsflansch 29 des jeweiligen Verbindungsschuhs 1 an. Mittelbar verbindet der Querträger 12 über die Verbindungsschuhe 1 quer zur Fahrzeuglängsrichtung 6 auch die an den Verbindungsflanschen 10; 28 der jeweiligen Verbindungsschuhe 1 angebrachten Längsträger 2 mit einander. Unterhalb des Verbindungsflansches 10; 28; 29 des Verbindungsschuhs 1 ist ein Lager 13 vorgesehen, an dem zur Stabilisierung der Fahrzeugachse 27 ein Stabilisator 26 und ein Längslenker oder ein anderes Bauelement befestigbar sind. In Fahrzeuglängsrichtung 6 an der Oberseite des Verbindungsschuhs 1 sind zur Befestigung von Halterungen 20 vorgesehen. Die Leitungen 16 überbrücken dabei die aneinander anstoßenden Stirnseiten der Längsträger 2 der Module 3, 8; 9. Die Halterungen 20 können kraftschlüssig, stoffschlüssig oder formschlüssig mit dem Verbindungsschuh 1 verbunden sein. In Fahrzeuglängsrichtung 6 gesehen sind die Halterungen 20 an der Oberseite, an der Unterseite oder seitlich am Verbindungsschuh 1 angebracht. Denkbar ist auch, die Halterungen 20 in Fahrzeuglängsrichtung 6 gesehen an der Innenseite der jeweiligen Oberseite, der Unterseite oder der Seitenfläche des Verbindungsschuhs 1 anzuordnen. Die Leitungen 16 können an den Halterungen 20 festgeklippst sein. Denkbar ist darüber hinaus, dass die Hafterungen 20 als Ösen ausgebildet sind, die die Leitungen 16 durchsetzen. Die Leitungen 16 sind darüber hinaus in jeder technisch realisierbaren Weise z.B. mit Hilfe von Klemmbuchsen an den Halterungen 20 befestigbar. Die Halterungen 20 umfassen Verbindungseinrichtungen in Form von Steckvorrichtungen oder Gewinden 24, mit deren Hilfe die Leitungen 16 verliersicher eingesteckt oder verschraubt werden können. Die vorausgehende Aufzählung ist dabei in keiner Weise abschließend gemeint. Die Halterung 20 ist ein technisches Verbindungselement 15, das zwei Leitungsstücke 16 verliersicher und dichtend miteinander verbindet. Die Halterung 20 umfasst einen Fuß 21, an dem mindestens eine Halteeinrichtung 22 angeordnet ist. Zusätzlich kann die Halterung 20 auch als Bohrung 23 eines Lochbildes 11 ausgebildet sein. Zur Verbindung zweier Leitungen 16 kann in der Bohrung 23 eine als Gewinde 24 oder als Rastvorrichtung 24 ausgebildete Kupplung 18 vorgesehen sein. Die Aufzählung ist in keiner Weise abschließend gemeint, vielmehr können auch andere technische Verbindungseinrichtungen zur Anwendung kommen.

Figur 4 zeigt einen Ausschnitt des Fahrgestellrahmens 4 eines Nutzfahrzeugs 5, der in Bezug zur Fahrzeuglängsrichtung 6 ein Frontmodul 3; 8 und ein Mittelmodul 3; 9 umfasst, welche beide in Bezug zur Fahrzeuglängsrichtung 6 auf dem gleichen Höhenniveau liegen. Innerhalb eines Moduls 3 sind die beiden Längsträger 2 über den Querträger 12 miteinander verbunden. Zur Verbindung zweier Längsträger 2 in Fahrzeuglängsrichtung 6 ist ein Verbindungsschuh 1 vorgesehen, an dessen Verbindungsflanschen 10; 28; 29 an der Außenseite des Längsträgers 2 des Fahrgestellrahmens 4 ein Querträger 12 angeordnet ist. Zur Befestigung der Längsträger 2 aneinander sowie zur Befestigung der Querträger 12 am Verbindungsschuh 1 sind am Verbindungsschuh 1 Lochbilder 11 angebracht, die den Durchtritt von Verbindungsschrauben 25 ermöglichen. In Fahrzeuglängsrichtung 6 gesehen, an der Unterseite des Verbindungsschuhs 1 ist das als Lager 13 ausgebildete Verbindungselement 15 darstellt, an dem ein Stabilisator 26 angeordnet ist. Der Stabilisator 26 verbindet eine Fahrzeugachse 27 mit dem Verbindungsschuh 1, wodurch eine mittelbare Anbindung der Fahrzeugachse 27 am Fahrgestellrahmen 4 bewirkt wird. Erfindungsgemäß dient der Verbindungsschuh 1 über das Lager 13 der Befestigung des Stabilisators 26 am Fahrgestellrahmen 4 des Nutzfahrzeugs 5.

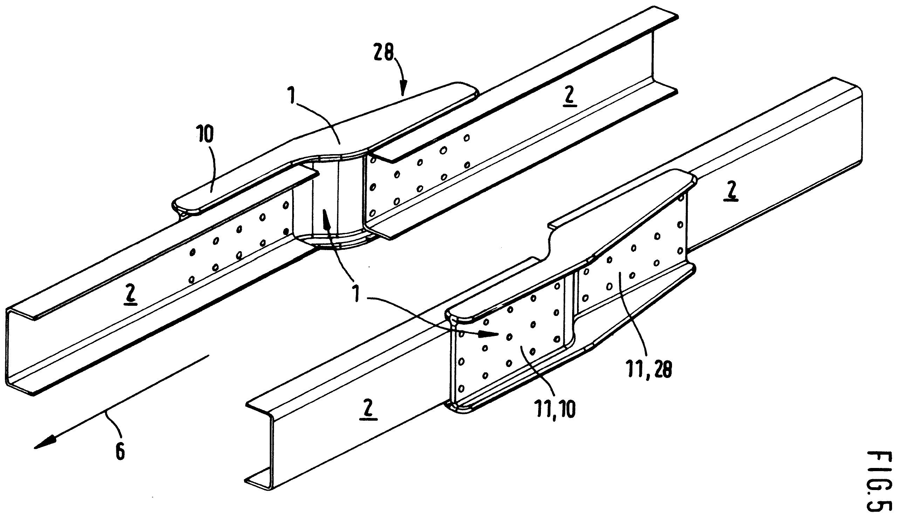

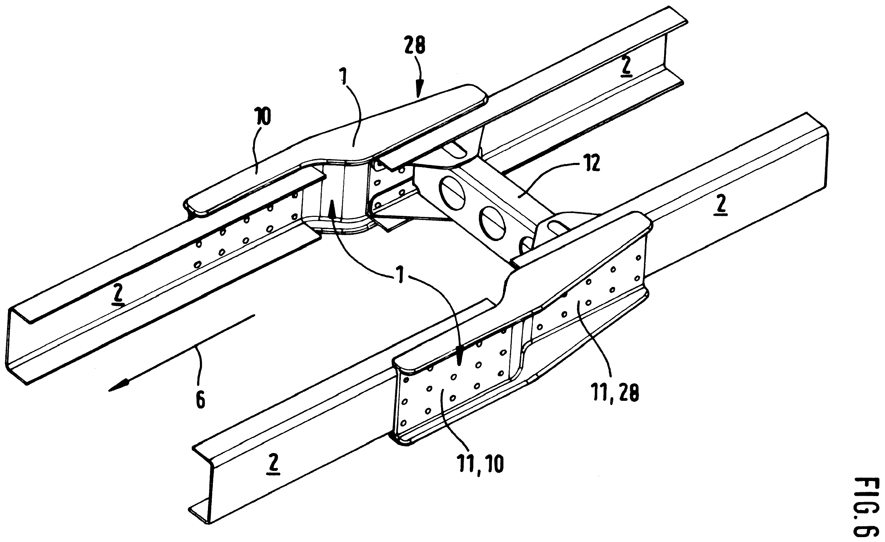

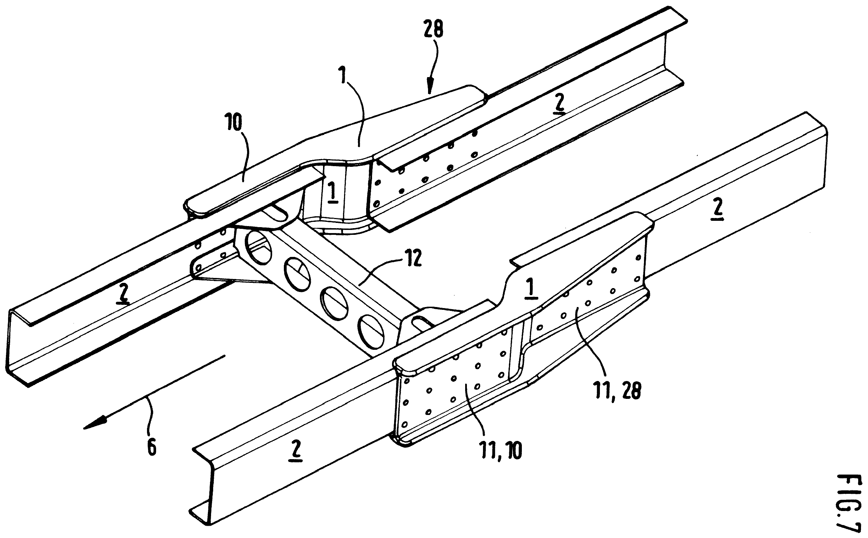

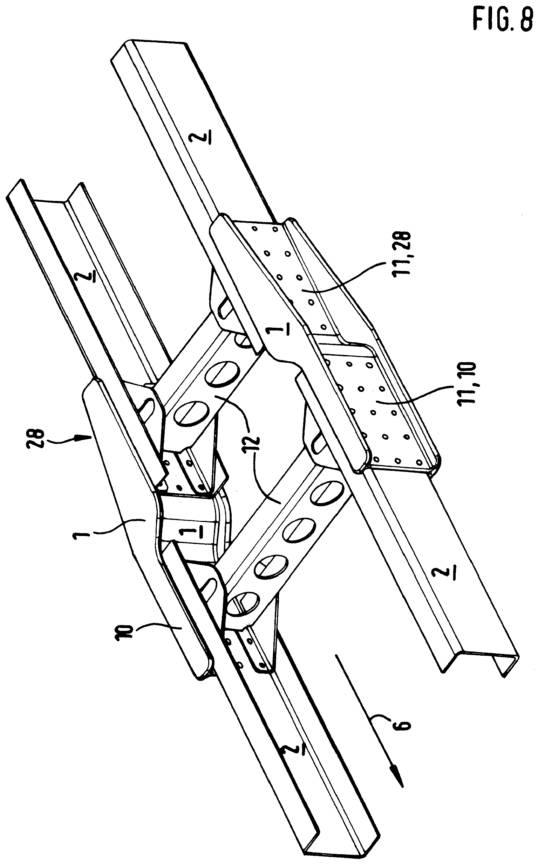

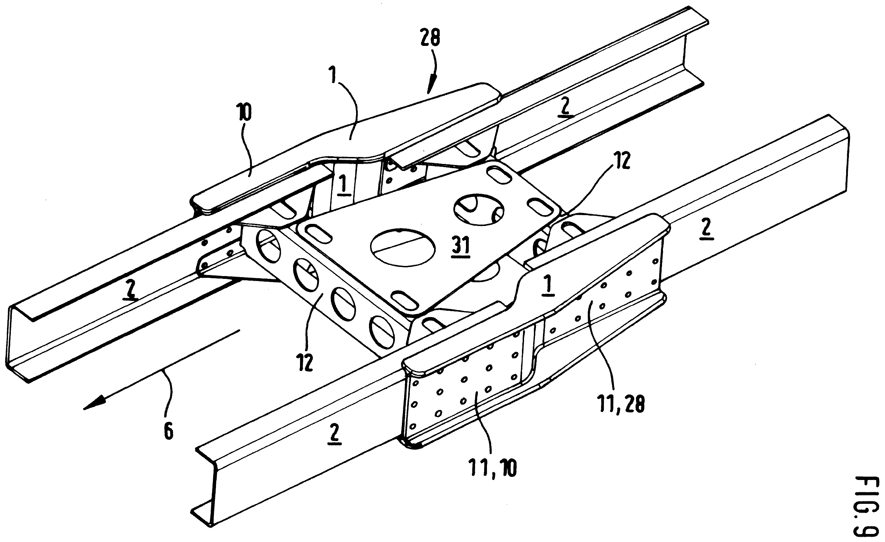

Die Figuren 5 bis 9 zeigen jeweils zwei, in Fahrzeuglängsrichtung 6 parallel zu einander angeordnete Verbindungsschuhe 1 mit innenseitig angeordneten Längsträgern 2. Die Lochbilder 11 der Verbindungsflansche 10 sind mit den Lochbildern 11 der Verbindungsflansche 28 der Verbindungsschuhe 1 identisch, sodass die in Fahrzeuglängsrichtung 6 einander gegenüber liegenden und jeweils stirnseitig paarweise aneinander anstoßenden Längsträger 2 über identische Verbindungsschuhe 1 mit einander verbindbar sind. Die Verbindungsflansche 10; 28 des Verbindungsschuhs 1 verlaufen relativ zur Fahrzeuglängsrichtung 6 zueinander horizontal versetzt. In Fig. 6 sind die Längsträger 2 in etwa rechtwinklig mit einem relativ zur Fahrzeuglängsrichtung 6 hinteren Querträger 12 verbunden. Die Fig. 7 entspricht der Darstellung der Fig. 6 mit dem Unterschied, dass in Fig. 7 ein relativ zur Fahrzeuglängsrichtung 6 vorderer Querträger 12 dargestellt ist. In Fig. 8 sind zur Verbindung der Längsträger 2 jeweils zwei Querträger 12 gezeigt, die in Fig. 9 über eine in Fahrzeuglängsrichtung 6 verlaufende Verbindung 31 mit einander verbunden sind.

### Bezugsziffern

- 1): Verbindungsschuh
- 2): Längsträger
- 3): Modul
- 4): Fahrgestellrahmen
- 5): Nutzfahrzeug
- 6): Fahrzeuglängsrichtung
- 7): Knick
- 8): Frontmodul
- 9): Mittelmodul
- 10): Verbindungsflansch
- 11): Lochbild
- 12): Querträger
- 13): Lager
- 14): Durchbruch
- 15): Verbindungselement
- 16): Leitung
- 17): Rohrstück
- 18): Kupplung
- 19): Mutter
- 20): Halterungen
- 21): Fuß
- 22): Halteeinrichtung
- 23): Bohrung
- 24): Gewinde
- 25): Verbindungsschraube
- 26): Stabilisator
- 27): Fahrzeugachse
- 28): Verbindungsflansch
- 29): Verbindungsflansch
- 30): Seitenwand
- 31): Verbindung

## Patentansprüche

1. Nutzfahrzeug mit einem Fahrgestellrahmen (4), der durch Querträger (12) verbundene Längsträger (2) umfasst, die durch je einen Verbindungsschuh (1) mit einander verbunden sind, wobei der Fahrgestellrahmen (4) aus Einzelmodulen (3; 8; 9) zusammengesetzt ist, **dadurch gekennzeichnet, dass** der Verbindungsschuh (1) Verbindungselemente (15) zum Anschluss von, an dem Fahrgestellrahmen (4) geführten Leitungen (16) und mit dem Fahrgestellrahmen (4) verbundenen Bauteilen aufweist.

2. Nutzfahrzeug nach Anspruch 1, **dadurch gekennzeichnet, dass** das Verbindungselement (15) an den Verbindungsschuh (1) angeformt ist.

3. Nutzfahrzeug nach Anspruch 1, **dadurch gekennzeichnet, dass** das Verbindungselement (15) ein in den Verbindungsschuh (1) integriertes Rohrstück (17) ist.

4. Nutzfahrzeug nach Anspruch 3, **dadurch gekennzeichnet, dass** das Rohrstück (17) an seinen beiden Enden je eine Kupplung (18) aufweist, die einen Anschluss an eine am Fahrgestellrahmen (4) geführte Leitung (16) ermöglichen.

5. Nutzfahrzeug nach Anspruch 1, **dadurch gekennzeichnet, dass** das Verbindungselement (15) ein in den Verbindungsschuh (1) integriertes elektrisches Leiterelement (15) ist, das an eine am Fahrgestellrahmen (4) geführte elektrische Leitung anschließbar ist.

6. Nutzfahrzeug nach Anspruch 1, **dadurch gekennzeichnet, dass** das Verbindungselement (15) eine am Verbindungsschuh (1) angeordnete Halterung (20) ist, die zur Befestigung eines über die Verbindung der Module (3; 8; 9) geführten Leitungssystems (16) vorgesehen ist.

7. Nutzfahrzeug nach Anspruch 6, **dadurch gekennzeichnet, dass** die Halterung (20) eine Klemmbuchse ist.

8. Nutzfahrzeug nach Anspruch 1, **dadurch gekennzeichnet, dass** das Verbindungselement (15) eine Buchse ist, in welches ein rohrförmiges Anschlussstück eines an dem Fahrgestellrahmen (4) zu befestigenden Bauteils einsteckbar ist.

9. Nutzfahrzeug nach Anspruch 1, **dadurch gekennzeichnet, dass** der Verbindungsschuh (1) ein Lager (13) zur Befestigung eines Stabilisators (13) aufweist.

## Claims

1. Commercial vehicle with a chassis frame (4) which comprises longitudinal beams (2) connected by cross beams (12), which longitudinal beams and cross beams are connected to one another by one connecting shoe (1) in each case, wherein the chassis frame (4) is composed of individual modules (3; 8; 9), **characterized in that** the connecting shoe (1) has connecting elements (15) for the connection of lines (16) guided on the chassis frame (4) and components connected to the chassis frame (4).

2. Commercial vehicle according to Claim 1, **characterized in that** the connecting element (15) is integrally formed on the connecting shoe (1).

3. Commercial vehicle according to Claim 1, **characterized in that** the connecting element (15) is a pipe segment (17) which is integrated in the connecting shoe (1).

4. Commercial vehicle according to Claim 3, **characterized in that** the pipe segment (17) has a coupling (18) at both of its ends, the couplings permitting a connection to a line (16) guided on the chassis frame (4).

5. Commercial vehicle according to Claim 1, **characterized in that** the connecting element (15) is an electric conductor element (15) which is integrated in the connecting shoe (1) and is connectable to an electrical line guided on the chassis frame (4).

6. Commercial vehicle according to Claim 1, **characterized in that** the connecting element (15) is a holder (20) which is arranged on the connecting shoe (1) and is provided for the fastening of a line system (16) guided via the connection of the modules (3; 8; 9).

7. Commercial vehicle according to Claim 6, **characterized in that** the holder (20) is a clamping bushing.

8. Commercial vehicle according to Claim 1, **characterized in that** the connecting element (15) is a bushing into which a tubular connection piece of a component to be fastened to the chassis frame (4) is insertable.

9. Commercial vehicle according to Claim 1, **characterized in that** the connecting shoe (1) has a bearing (13) for the fastening of a stabilizer (13).

## Revendications

1. Véhicule utilitaire comprenant un cadre de châssis (4) qui comprend des longerons (2) connectés par des traverses (12), qui sont connectés les uns aux autres par un sabot de liaison respectif (1), le cadre de châssis (4) étant constitué de modules individuels (3 ; 8 ; 9), **caractérisé en ce que** le sabot de liaison (1) présente des éléments de liaison (15) pour le raccordement de conduites (16) guidées sur le cadre de châssis (4) et de composants connectés au cadre de châssis (4).

2. Véhicule utilitaire selon la revendication 1, **caractérisé en ce que** l'élément de liaison (15) est formé sur le sabot de liaison (1).

3. Véhicule utilitaire selon la revendication 1, **caractérisé en ce que** l'élément de liaison (15) est une pièce tubulaire (17) intégrée dans le sabot de liaison (1).

4. Véhicule utilitaire selon la revendication 3, **caractérisé en ce que** la pièce tubulaire (17) présente au niveau de ses deux extrémités un accouplement respectif (18), les accouplements permettant un raccord à une conduite (16) guidée sur le cadre de châssis (4).

5. Véhicule utilitaire selon la revendication 1, **caractérisé en ce que** l'élément de liaison (15) est un élément conducteur électrique (15) intégré dans le sabot de liaison (1), qui peut être raccordé à une conduite électrique guidée sur le cadre de châssis (4).

6. Véhicule utilitaire selon la revendication 1, **caractérisé en ce que** l'élément de liaison (15) est une fixation (20) disposée sur le sabot de liaison (1), laquelle est prévue pour la fixation d'un système de conduites (16) guidé par le biais de la liaison des modules (3 ; 8 ; 9).

7. Véhicule utilitaire selon la revendication 6, **caractérisé en ce que** la fixation (20) est une douille de serrage.

8. Véhicule utilitaire selon la revendication 1, **caractérisé en ce que** l'élément de liaison (15) est une douille dans laquelle peut être enfichée une pièce de raccordement tubulaire d'un composant devant être fixé sur le cadre de châssis (4).

9. Véhicule utilitaire selon la revendication 1, **caractérisé en ce que** le sabot de liaison (1) présente un palier (13) pour la fixation d'un stabilisateur (13).
